Europäisches Patentamt

European Patent Office

Office européen des brevets

(19)

(11) Numéro de publication : **0 155 513 B1**

# (12) FASCICULE DE BREVET EUROPÉEN

(45) Date de publication du fascicule du brevet :
**07.09.88**

(51) Int. Cl.⁴ : **G 01 N  1/20**

(21) Numéro de dépôt : **85101760.8**

(22) Date de dépôt : **18.02.85**

(54) Dispositif de prélèvement d'huile sur un moteur.

(30) Priorité : **29.02.84 FR 8403163**

(43) Date de publication de la demande :
**25.09.85 Bulletin 85/39**

(45) Mention de la délivrance du brevet :
**07.09.88 Bulletin 88/36**

(84) Etats contractants désignés :
**BE CH DE GB IT LI NL**

(56) Documents cités :
**DE-A- 3 222 234**
**FR-A- 2 374 629**
**US-A- 2 162 259**
**US-A- 2 426 369**
**US-A- 2 859 765**
**US-A- 3 812 722**

(73) Titulaire : **CONSORTIUM DE RECHERCHES POUR L'APPLICATION DES FLUIDES, CRAF
Les Clos des 4 Vents
F-49650 Brain sur Allonnes (FR)**

(72) Inventeur : **Javelly, Christian
Le Moulin de la Motte
F-49650 Allonnes (FR)**
Inventeur : **Paris, René 8, Chemin du Bois Brard
Saint Hilaire Saint Florent
F-49400 Saumur (FR)**

(74) Mandataire : **Casalonga, Axel et al
BUREAU D.A. CASALONGA OFFICE JOSSE & PETIT
Morassistrasse 8
D-8000 München 5 (DE)**

Jouve, 18, rue St-Denis, 75001 Paris, France

## Description

L'invention concerne le prélèvement d'une faible quantité d'huile sur un moteur thermique en fonctionnement.

En effet, pour les moteurs thermiques, notamment de véhicules automobiles, la tendance est d'espacer les vidanges, ce qui s'obtient en améliorant la qualité des huiles, notamment des huiles de synthèse, mais également en exerçant une surveillance de l'état de l'huile entre deux vidanges grâce à des analyses périodiques. Il est donc nécessaire d'effectuer à intervalles réguliers un prélèvement d'huile, d'environ 30 cm³, pour envoyer au laboratoire chargé de l'analyse.

Avec la disposition usuelle des moteurs de véhicules, le seul endroit où l'on puisse effectuer un prélèvement d'huile est le bouchon de vidange situé sous le carter moteur, ce qui est assez peu pratique, non seulement en raison de son emplacement, mais également par le fait qu'une fois dévissé, il devient très difficile de prélever une petite quantité précise d'huile sans gaspiller une part importante d'huile qui s'écoule avant que l'on puisse revisser le bouchon. En outre, il est préconisé de prélever l'huile sur le moteur chaud après fonctionnement. Dans ce cas, la température devient un obstacle supplémentaire rendant l'opération encore plus difficile et dangereuse. Enfin, l'huile prélevée évacue les dépôts du fond du carter et n'est donc pas représentative de l'huile en circulation dans le circuit sous pression.

On pourrait naturellement envisager de placer un robinet de puisage sur ce circuit d'huile sous pression, mais d'une part, les robinets usuels sont très mal adaptés à un puisage précis d'une faible quantité d'huile sur un circuit à haute pression (2 à 6 bars) et ne peuvent garantir une absence de fuites entre deux puisages, et d'autre part, l'installation d'un tel robinet sur un moteur actuellement en service exigerait une reprise d'usinage onéreuse pour assurer le raccordement.

Le but de l'invention est d'éliminer les inconvénients précédents en réalisant un robinet de puisage particulièrement adapté à cet usage, c'est-à-dire résistant à la pression, à la température, d'une grande sécurité, et d'un débit limité, et d'autre part, de réaliser un dispositif de raccordement permettant d'installer ce robinet sans aucun usinage sur un moteur existant.

Le robinet selon l'invention comprend un corps de révolution présentant intérieurement un alésage en communication avec l'arrivée de pression et fermé à son extrémité par un joint d'arbre, par exemple un joint torique, et un organe obturateur coulissant axialement dans cet alésage, et comportant une partie cylindrique susceptible de coulisser de manière étanche dans ledit joint, et d'une manière non étanche dans l'alésage en assurant un débit limité par l'ajustage précis entre les diamètres de ce corps cylindrique et de cet alésage, et également une partie conique faisant suite à cette partie cylindrique du côté de l'extérieur et venant assurer une ouverture progressive lorsque l'obturateur est enfoncé axialement, par action sur l'organe obturateur, en luttant à la fois contre la pression du fluide et contre un ressort antagoniste logé dans la tête de robinet qui se raccorde sur ce corps et qui comprend elle-même un autre joint d'étanchéité au passage de l'extrémité de l'organe obturateur vers l'extérieur, et un tube d'écoulement latéral.

Le dispositif de raccordement comprend de préférence un ensemble de raccordement orientable s'intercalant entre le pressostat normalement prévu sur le moteur et l'embout de raccordement de ce pressostat sur le bloc moteur.

D'autres particularités de l'invention apparaîtront dans la description qui va suivre d'un mode de réalisation pris comme exemple et représenté sur le dessin annexé, sur lequel :

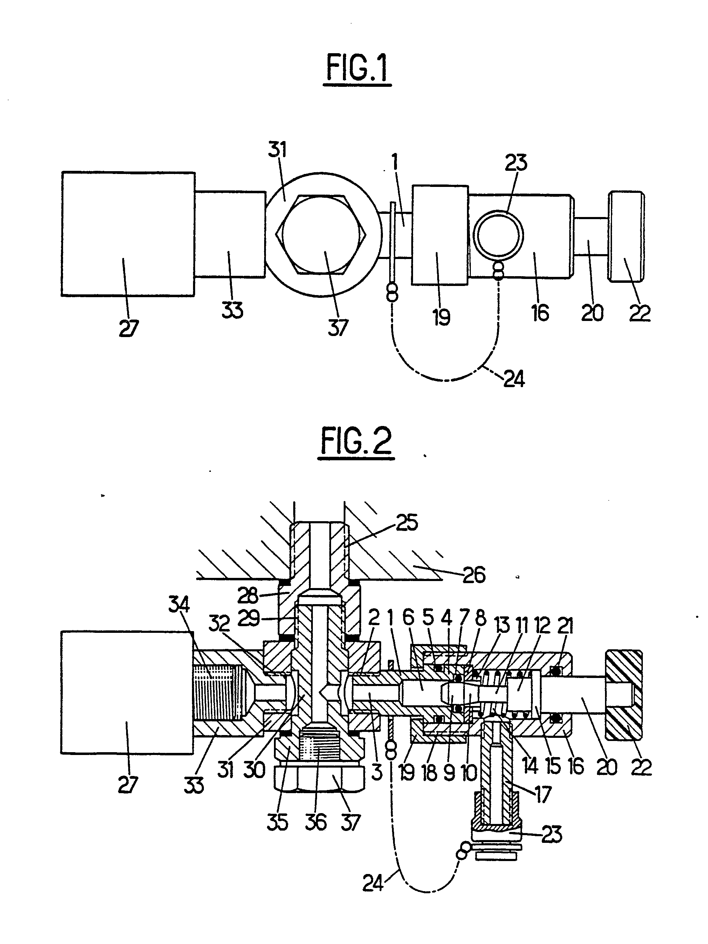

la figure 1 est une vue extérieure en élévation du dispositif, et la figure 2 une coupe horizontale axiale partielle de ce même dispositif.

Conformément à l'invention, le robinet de puisage proprement dit comprend un corps de révolution 1 comportant à une extrémité un filetage de raccordement 2 et un trou de raccordement 3 par lequel arrive l'huile sous pression, et à l'autre extrémité, une partie de plus grand diamètre 4 comportant une gorge extérieure 5 pour un joint d'étanchéité, avec en outre intérieurement un alésage principal 6 se terminant du côté opposé au filetage 2 par une autre gorge 7 pour un joint d'étanchéité principal. En variante, pour éviter l'usinage de cette deuxième gorge intérieure de faible diamètre, on peut la réaliser sous la forme d'un alésage épaulé refermé extérieurement par une pièce complémentaire 8 dont le diamètre intérieur prolonge l'alésage 6.

Par ailleurs, l'organe obturateur comporte essentiellement une partie cylindrique 9 de diamètre approprié pour pouvoir coulisser de manière parfaitement étanche à la pression à l'intérieur du joint principal 7, tout en pouvant coulisser également dans l'alésage 6 d'une manière non étanche, c'est-à-dire avec un jeu radial relativement faible déterminant le débit maximal autorisé sous la pression de fonctionnement. Cette partie cylindrique 9 se prolonge du côté aval par rapport à la pression par une partie conique 10 qui permet une ouverture et une refermeture progressives en se recentrant sur le joint.

Au-delà de cette partie conique 10, l'organe obturateur se prolonge par une partie cylindrique 11 de faible diamètre, puis une partie cylindrique 12 de plus fort diamètre déterminant un épaulement susceptible de venir buter sur la pièce complémentaire 8 du corps, laquelle comporte un rebord interne cylindrique 13 pourvu de fentes radiales pour éviter l'obturation lorsque l'épaulement vient buter contre cette pièce. Un ressort hélicoïdal 14 est disposé entre la pièce 8 et une collerette 15 de l'organe obturateur, ce ressort passant à l'extérieur du rebord 11 et de la partie cylindrique 12.

La tête de robinet 16 est également constituée par une pièce de révolution, mis à part un orifice latéral sur lequel se raccorde un tube d'écoulement 17. Cette tête de robinet comporte un épaulement intérieur venant appuyer sur la pièce complémentaire 8 et un alésage venant se raccorder de manière étanche sur le joint 5, avec extérieurement un filetage 18 permettant la fixation sur le corps 1 du robinet au moyen d'un écrou à tube 19. En réalité, les jeux sont prévus de telle manière que lorsque l'écrou 19 est bloqué sur la tête 16, il ne vient pas bloquer la partie 4 du corps entre l'écrou et l'épaulement intérieur de la tête 16, de manière que l'ensemble puisse tourner librement autour du corps 1, même avec l'écrou 19 bloqué et la pression établie.

Au-delà de la collerette 15 de butée, l'organe obturateur se prolonge par une tige de manœuvre 20 également cylindrique traversant le fond de la tête 16 d'une manière étanche en passant à travers un joint 21 disposé dans une gorge.

L'extrémité de la tige 20 peut être actionnée directement à la main pour assurer l'ouverture par enfoncement de l'organe obturateur, à l'encontre de la pression du fluide s'exerçant sur la partie cylindrique 9, et également de la tension du ressort 14. Dans le cas où cet organe obturateur est réalisé en métal bon conducteur de la chaleur, il est cependant préférable de le terminer extérieurement par un bouton isolant 22 fixé d'une manière appropriée.

En l'absence de poussée sur le bouton 22 ou sur la tige 20, le robinet est donc constamment fermé, et il l'est à plus forte raison sous l'effet de la pression du fluide lorsque le moteur est en fonctionnement. L'enfoncement produit donc un débit d'huile précis et régulier alors que le relâchement fourni à coup sûr une fermeture étanche sans nécessiter aucun réglage. A titre de sécurité supplémentaire, il peut être prévu un bouchon 23 venant se visser à l'extrémité du tube d'écoulement 17 et de préférence retenu par une chaîne 24 ou un lien quelconque au reste du dispositif pour demeurer imperdable.

La libre rotation de l'ensemble du robinet qui vient d'être décrit autour de son corps 1 permet facilement d'orienter le tube d'écoulement 17 sous l'angle le plus approprié pour permettre le prélèvement de la quantité voulue dans le tube à échantillon.

Un moteur prévu d'origine pour être équipé avec ce robinet comporte naturellement un raccordement fileté en communication avec le circuit d'huile sous pression et dans lequel vient se visser de manière étanche la partie filetée 2 à la base du corps 1, ce raccordement étant naturellement prévu à un endroit et dans une orientation appropriés pour permettre le prélèvement facile des échantillons d'huile.

Dans le cas plus difficile des moteurs déjà en service, ou de ceux qui ne seraient pas munis d'une telle sortie de raccordement, on utilise selon l'invention le filetage de raccordement 25 pratiqué sur le carter moteur 26 et destiné au raccordement du pressostat 27 que comporte habituellement un moteur pour éteindre le voyant de pression d'huile au tableau de bord lorsque la pression voulue est atteinte. Comme il faut naturellement conserver l'usage de ce pressostat 27, la prise de pression pour le robinet selon l'invention est intercalée entre le pressostat 27 et l'embout 25 destiné à le recevoir.

Comme les diamètres et les pas de filetage utilisés pour le raccordement des divers présostats en usage sont extrêmement variables, il est en général nécessaire de prévoir des adaptateurs aux deux niveaux. On trouve ainsi sur la figure 2, un adaptateur 28 d'un filetage mâle approprié pour se visser dans le filetage 25 du moteur 26, et un filetage femelle adapté pour recevoir l'extrémité filetée 29 d'une vis creuse de raccordement 30 permettant de raccorder d'une manière étanche et orientable une pièce de jonction 31 qui comporte d'un côté un trou fileté pour le raccordement de l'extrémité filetée 2 du corps 1 du robinet, et d'un autre côté, un trou fileté, de préférence semblable, pour le raccordement du filetage mâle 32 d'un deuxième adaptateur 33 qui comporte également un filetage femelle apte à recevoir l'embout fileté 34 du pressostat 27, qui est naturellement identique au filetage 25. Les deux adaptateurs 28 et 33 vont par conséquent par paires adaptées à chaque type de pressostat.

La tête 35 de la vis creuse de raccordement 30 comporte de préférence également un trou fileté pour recevoir la partie filetée 36 d'un bouchon de fermeture 37, cette partie filetée 36 étant de même côté que l'embout 34 de l'adaptateur 33 pour permettre si on le désire de monter l'adaptateur 33, donc le pressostat 27, dans l'axe du trou de raccordement 25 par permutation des deux éléments 33 et 37.

Ce dispositif permet le montage du bloc de raccordement 31 dans toutes les orientations possibles autour de l'axe du trou dans le moteur, mais seulement à l'état débloqué de la vis 35, l'orientation étant ensuite bloquée de manière étanche par serrage de cette vis sur des joints plats non référencés. Au contraire, comme on l'a vu, l'orientation du tube d'écoulement latéral 17 du robinet demeure orientable autour de l'axe de celui-ci après blocage de l'écrou 19 et même après mise en pression de l'huile.

Le dispositif selon l'invention permet ainsi de s'adapter facilement à tous les cas d'utilisation, en particulier à tous les moteurs non spécialement destinés à le recevoir, et il est clair par ailleurs que tous ses composants principaux sont des pièces de décolletage de faible coût.

## Revendications

1. Dispositif de prélèvement d'huile sur un moteur, constitué essentiellement par un robinet de puisage se raccordant sur le circuit sous pression d'huile de graissage du moteur, caractérisé par le fait qu'il comporte un corps (1) de révolution, présentant intérieurement un alésage axial (6) en communication (3) avec le circuit d'huile du côté de son extrémité (2) de raccordement et muni à son autre extrémité d'un joint d'arbre (7), et un organe obturateur comportant essentiellement une partie cylindrique (9) susceptible de coulisser de manière étanche à travers le joint d'arbre (7) et de coulisser de manière non étanche dans ledit alésage (6), le jeu existant entre cette partie cylindrique (9) et cet alésage (6) définissant la section de passage qui détermine le débit maximum du robinet de puisage sous la pression utilisée, ladite partie cylindrique (9) étant suivie du côté aval par rapport à la pression par une partie conique (10) assurant une progressivité de l'ouverture et de la fermeture lors du coulissement axial de l'organe obturateur, ce dernier étant sollicité dans le sens de la fermeture jusqu'à une butée (15) sous l'action de la pression d'huile et en outre d'un ressort de rappel (14).

2. Dispositif selon la revendication 1, caractérisé par le fait que la tête (16) du robinet de puisage est montée libre en rotation autour du corps (1) grâce à un joint tournant (5), un autre joint (21) étant prévu à l'autre extrémité à la traversée vers l'extérieur d'une tige de manœuvre (20) de l'organe obturateur, cette tête comportant en outre un tube d'écoulement latéral (17) qui demeure ainsi constamment orientable autour de l'axe du robinet.

3. Dispositif selon la revendication 2, caractérisé par le fait que la tige de manœuvre (20) se termine par un bouton (22) constituant une isolation thermique.

4. Dispositif selon l'une des revendications 2 et 3, caractérisé par le fait que le tube d'écoulement est pourvu par sécurité d'un capuchon de fermeture (23) imperdable.

5. Dispositif selon l'une des revendications précédentes, caractérisé par le fait que le robinet de puisage se visse sur un corps de raccordement (31), lui-même raccordé à l'aide d'une vis creuse de raccordement orientable (30) sur le bloc moteur à l'emplacement normalement prévu pour le raccordement du pressostat (27) du moteur, directement ou par l'intermédiaire d'un adaptateur (28), et que ledit bloc de raccordement (31) comporte lui-même au moins un trou de raccordement supplémentaire permettant de raccorder ledit pressostat (27) retiré du moteur, directement ou par l'intermédiaire d'un autre adaptateur (33).

6. Dispositif selon la revendication 5, caractérisé par le fait que la tête (35) de la vis creuse de raccordement (30) comporte elle-même un trou de raccordement axial pour le pressostat (27) ou pour son adaptateur (33).

**Claims**

1. Engine oil withdrawal device, consisting essentially of a tapping cock connected to the pressurized circuit of engine lubricating oil, characterized in that it has a body of revolution (1) having internally an axial bore (6) in communication (3) with the oil circuit on the side of its connecting end (2) and provided at its other end with a spindle joint (7), and a closing-off element essentially having a cylindrical part (9) capable of sliding in sealed manner through the spindle joint (7) and of sliding in non-sealed manner in the said bore (6), the clearance existing between this cylindrical part (9) and this bore (6) delimiting the section of passage which determines the maximum flow of the tapping cock under the pressure used, the said cylindrical part (9) being followed on the downstream side with respect to the pressure by a conical part (10) ensuring progressive opening and closing during the axial sliding of the closing-off element, the latter being pushed in the direction of closing as far as a stop (15) under the action of the pressure of oil and, moreover, of a return spring (14).

2. Device according to Claim 1, characterized in that the head (16) of the tapping cock is mounted in free rotation about the body (1) owing to a revolving joint (5), another joint (21) being provided at the other end at the point of passage towards the outside of an actuating rod (20) of the closing-off element, this head furthermore having a lateral flow-off tube (17) which thus remains constantly orientable about the axis of the cock.

3. Device according to Claim 2, characterized in that the actuating rod (20) ends in a knob (22) constituting heat insulator.

4. Device according to one of Claims 2 and 3, characterized in that the flow-off tube is provided, for reasons of safety, with a closure cap (23) which cannot be lost.

5. Device according to one of the preceding claims, characterized in that the tapping cock is screwed onto a connection body (31), which is itself connected with the aid of a hollow connection screw (30) which can be oriented on the engine block at the position normally provided for connecting the pressure controller (27) of the engine, directly or by way of an adapter (28), and in that the said connection block (31) itself has at least one additional connection hole enabling the said pressure control (27) withdrawn from the engine to be connected directly or by way of another adapter (33).

6. Device according to Claim 5, characterized in that the head (35) of the hollow connecting screw (30) itself has an axial connection hole for the pressure controller (27) or for its adapter (33).

**Patentansprüche**

1. Vorrichtung zur Ölentnahme auf einem Motor, die im wesentlichen aus einem Schöpfhahn besteht, der an den Druckölkreis für die Motorschmierung angeschlossen ist, dadurch gekennzeichnet, daß ein Umdrehungskörper (1) mit einer inneren Axialbohrung (6), die am anschlußseitigen Ende (2) in Verbindung (3) mit dem Ölkreislauf steht und an ihrem anderen Ende mit einer Wellendichtung (7) versehen ist, und ein Verschlußelement vorgesehen sind, das im wesentlichen einen zylindrischen Abschnitt (9) aufweist, der dicht durch die Wellendichtung (7) und nicht dicht in der Axialbohrung (6) gleiten kann, daß das zwischen dem zylindrischen Abschnitt (9) und der Axialbohrung (6) vorhandene Spiel den Durchlaufquerschnitt bestimmt, der die maximale Durchflußmenge des Schöpfhahns unter dem eingesetzten Druck bestimmt, daß weiterhin auf den zylindrischen Abschnitt (9) stromabwärts bezüglich des Drucks ein konischer Abschnitt (10) folgt, der für ein progressives Öffnen und Schließen beim axialen Gleiten des Verschlußorganes sorgt, und daß letzteres durch den Öldruck und darüber hinaus durch eine Rückstellfeder (14) in Schließrichtung bis zu einem Anschlag (15) beaufschlagt wird.

2. Vorrichtung nach Anspruch 1, dadurch gekennzeichnet, daß der Kopf (16) des Schöpfhahns mittels einer Drehdichtung (5) um den Körper (1) frei drehbar angeordnet ist, daß am anderen Ende auf dem nach außen durchgeführten Teil eines Betätigungsschaftes (20) des Verschlußorganes eine weitere Dichtung (21) vorgesehen ist, und daß der Kopf weiterhin ein seitliches Ausflußrohr (17) trägt, das auf diese Weise beständig um die Achse des Hahns schwenkbar bleibt.

3. Vorrichtung nach Anspruch 2, dadurch gekennzeichnet, daß der Betätigungsschaft (20) durch einen Knopf (22), der eine thermische Isolation bildet, abgeschlossen ist.

4. Vorrichtung nach einem der Ansprüche 2 und 3, dadurch gekennzeichnet, daß das Ausflußrohr zur Sicherheit mit einer unverlierbaren Verschlußkappe (23) versehen ist.

5. Vorrichtung nach einem der vorgehenden Ansprüche, dadurch gekennzeichnet, daß der Schöpfhahn an einen Anschlußkörper (31) angeschraubt ist, der selbst direkt oder über einen Adapter (28) mittels einer ausrichtbaren hohlen Anschlußschraube (30) an der normalerweise für den Druckregler (27) des Motors vorgesehenen Stelle auf den Motorblock aufgesetzt ist, und daß der Anschlußblock (31) selbst mindestens eine zusätzliche Anschlußbohrung enthält, die direkt oder über einen weiteren Adapter (33) das Ansetzen des vom Motor abgenommenen Druckreglers (27) gestattet.

6. Vorrichtung nach Anspruch 5, dadurch gekennzeichnet daß der Kopf (35) der hohlen Anschlußschraube (30) seinerseits eine axiale Anschlußbohrung für den Druckregler (27) oder für seinen Adapter (33) aufweist.

## FIG.1

## FIG.2